# EUROPEAN PATENT APPLICATION

(11) **EP 3 034 152 A1**
(43) Date of publication of application: **22.06.2016**
(21) Application number: 14853761.6
(22) Date of filing: 10.10.2014
(51) Int. Cl.: B01D 53/14, B01D 53/34, B01D 53/52, B01D 53/62, B01D 53/77, C07C 321/14, C07C 321/16, C07C 323/12, C07C 323/52

(54) **COMPOSITE AMINE ABSORPTION SOLUTION, AND METHOD AND DEVICE FOR REMOVING CO2 AND/OR H2S**

(30) Priority: 15.10.2013 JP 2013215064
(71) Applicant: Mitsubishi Heavy Industries, Ltd., Tokyo 108-8215 (JP); The Kansai Electric Power Co., Inc., Osaka-shi, Osaka 530-8270 (JP)
(72) Inventor: TANAKA, Hiroshi, Tokyo 108-8215 (JP); HIRATA, Takuya, Tokyo 108-8215 (JP); OISHI, Tsuyoshi, Tokyo 108-8215 (JP); ENDO, Takahiko, Tokyo 108-8215 (JP); KAWASAKI, Shimpei, Tokyo 108-8215 (JP)
(74) Representative: Studio Torta S.p.A.
(86) International application number: PCT/JP2014/077264
(87) International publication number: WO 2015/056657

(57) **Abstract**

A composite amine absorbent is an absorbent dissolved in water for absorbing CO₂ or H₂S in gas, or both of them, which comprises:
1) at least one amine compound, and
2) a disulfide compound as an oxidative degradation inhibitor for the absorbent,
wherein the disulfide compound is a compound represented by the following Chemical Formula (I).

R¹-S₋S-R² ·· · (I)

in the formula, R¹ or R² is any one of an alkyl group with 1 to 4 carbon atoms, a hydroxyethyl group, a carboxyethyl group, a cyclohexyl group, and a dibutylthiocarbamoyl group.

## Description

### Field

The present invention relates to a composite amine absorbent for absorbing CO₂ or H₂S, or both of them, and an apparatus and a method for removing CO₂ or H₂S, or both of them.

### Background

Recently, a greenhouse effect caused by CO₂ is noted as one reason of having global warming phenomenon. Thus, a solution for protecting earth and environment is urgently needed all over the world. As a source for generating CO₂, there is every human activity which is involved with combustion of fossil fuel, and thus a demand for inhibited emission tends to increase more than ever. Accordingly, for power generating facilities like thermoelectric power station which uses a large amount of fossil fuel, extensive studies are made on a method for removing and recovering CO₂ in flue gas by bringing flue gas from a boiler into contact with an amine-based CO₂ absorbent and a method of storing recovered CO₂ without release to air. Furthermore, as a process used for removing and recovering CO₂ in flue gas by using an CO₂ absorbent, there is a process in which flue gas is brought into contact with a CO₂ absorbent in an absorber, the absorbent after absorption of CO₂ is heated in a regenerator, and with release of CO₂, the absorbent is regenerated and recycled to the absorber for reuse (for example, see Patent Literature 1).

According to a method of removing and recovering CO₂ from CO₂ containing gas like flue gas by using an CO₂ absorbent and the process described above, the process is annexed to facilities for combustion, and thus the cost related to the operation should be reduced as much as possible. Among the above processes, the regeneration process particularly consumes a large amount of heat energy, and thus it needs to be provided as a process which can save the energy as much as possible.

Accordingly, a suggestion has been made in a related art that part of a semi-lean solution is discharged to the outside from a regenerator for heat exchange with a lean solution in a heat exchanger, subjected to heat exchange with steam condensate in a heat exchanger, and returned to a lower side than the extraction area, and by increasing the temperature of a semi lean solution fed to the bottom side of a regenerator, steam consumption amount is reduced (for example, see Patent Literature 2 (Example 8 and FIG. 17)).

Meanwhile, for an improvement of the performance of a CO₂ absorbent, an absorbent useful for improving the absorption performance has been suggested (Patent Literature 3).

However, it is important for the CO₂ absorbent to have not only the absorption performance but also the desorption ability when regenerating the absorbent. According to a related art, a focus has been made for improvement of the absorption performance, and it is a current situation that there are only few studies made on an absorbent with good regeneration performance.

Accordingly, as steam is required for recovery of CO₂ from flue gas, it is desired to reduce the cost related to operation and exhibit the energy saving property for having desired recovery amount of CO₂ even with a small amount of steam. Thus, an absorbent having not only the absorption performance but also the regeneration ability has been suggested (Patent Literature 4).

### Citation List

### Patent Literature

Patent Literature 1: JP 7-51537 A
Patent Literature 2: JP 4690659 B1
Patent Literature 3: JP 2008-307519 A
Patent Literature 4: JP 4634384 B1

### Summary

### Technical Problem

However, there is a strong demand for reducing the loss of an absorbent caused by degradation of an absorbent more than the suggestion of Patent Literature 4.

Under the circumstances described above, object of the present invention is to provide a composite amine absorbent having not only the absorption ability but also the regeneration ability, and an apparatus and a method for removing CO₂ or H₂S, or both of them.

### Solution to Problem

The first aspect of the present invention in order to achieve the above-mentioned problem is a composite amine absorbent dissolved in water for absorbing CO₂ or H₂S in gas, or both of them, which comprises 1) at least one amine compound, and 2) a disulfide compound as an oxidative degradation inhibitor for the absorbent, wherein the disulfide compound is a compound represented by the following Chemical Formula (I):

R¹-S-S-R² ··· (I)

in the formula, R¹ or R² is any one of an alkyl group with 1 to 4 carbon atoms, a hydroxyethyl group, a carboxyethyl group, a cyclohexyl group, and a dibutylthiocarbamoyl group.

The second aspect is the composite amine absorbent according to the first aspect, wherein the disulfide compound was added at 1 to 20% by weight to the amine compound.

The third aspect is the composite amine absorbent according to the first aspect, wherein the amine compound is at least one primary amine compound, at least one secondary amine compound, at least one tertiary amine compound, or a mixture thereof.

The fourth aspect is the composite amine absorbent according to the third aspect, wherein, when the amine compound is at least one primary amine compound, at least one secondary amine compound, or a mixture thereof, a tertiary amine compound is contained in addition to the disulfide compound as the oxidative degradation inhibitor, and the tertiary amine compound is a compound represented by the following Chemical Formula (II): 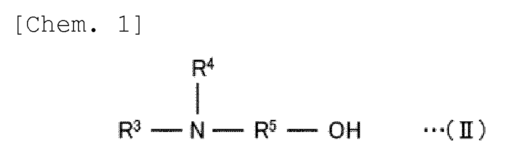 in the formula, R³ is an alkyl group with 1 to 4 carbon atoms, R⁴ is an alkyl group with 1 to 4 carbon atoms or a hydroxyethyl group, and R⁵ is an alkyl group with 2 to 4 carbon atoms.

The fifth aspect is the composite amine absorbent according to the fourth aspect, wherein the disulfide compound and the tertiary amine compound are added at 1 to 20% by weight to the primary amine compound, the secondary amine compound, or the mixture thereof.

The sixth aspect is the composite amine absorbent according to the third aspect, wherein, when the amine compound is at least one primary amine compound, at least one secondary amine compound, or a mixture thereof, at least one piperidine compound is contained in addition to the disulfide compound as the oxidative degradation inhibitor, and the piperidine compound is a compound represented by the following Chemical Formula (III) (with the proviso that piperidine is excluded): 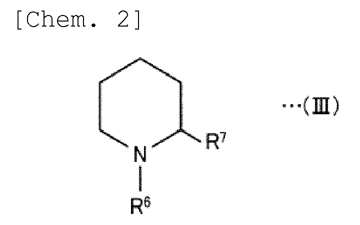 in the formula, R⁶ is H, an alkyl group with 1 to 4 carbon atoms, a 2-aminoethyl group, or a 3-aminopropyl group, and R⁷ is any one of H and an alkyl group with 1 to 4 carbon atoms.

The seventh aspect is the composite amine absorbent according to the sixth aspect, wherein the disulfide compound and the piperidine compound are added at 1 to 20% by weight to a primary amine compound, a secondary amine compound, or a mixture thereof.

The eighth aspect is a composite amine absorbent dissolved in water for absorbing CO₂ or H₂S in gas, or both of them, which comprises 1) at least one primary amine compound, at least one secondary amine compound, or a mixture thereof, and 2) an oxidative degradation inhibitor for the absorbent, wherein the oxidative degradation inhibitor is a piperidine compound having the following Chemical Formula (III) with exclusion of piperidine: 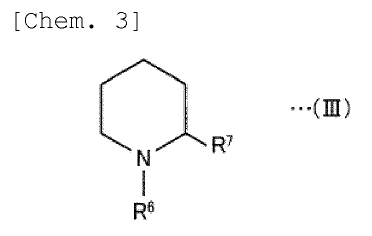 in the formula, R⁶ is H, an alkyl group with 1 to 4 carbon atoms, a 2-aminoethyl group, or a 3-aminopropyl group, and R⁷ is any one of H and an alkyl group with 1 to 4 carbon atoms.

The ninth aspect is the composite amine absorbent according to the eighth aspect, wherein the piperidine compound is added at 1 to 20% by weight to the primary amine compound, the secondary amine compound, or the mixture thereof.

The tenth aspect is an apparatus for removing CO₂ or H₂S, or both of them including an absorber for removing CO₂ or H₂S, or both of them by bringing gas containing CO₂ or H₂S, or both of them into contact with an absorbent, and a regenerator for regenerating a solution in which CO₂ or H₂S, or both of them has been absorbed, wherein the solution regenerated in the regenerator after removal of CO₂ or H₂S, or both of them is used again in the absorber, the apparatus being configured to use the composite amine absorbent according to any one of the first to the ninth aspects.

The eleventh aspect is a method for removing CO₂ or H₂S, or both of them by using an absorber for removing CO₂ or H₂S, or both of them by bringing gas containing CO₂ or H₂S, or both of them into contact with an absorbent, and a regenerator for regenerating a solution in which CO₂ or H₂S, or both of them has been absorbed, wherein the solution regenerated in the regenerator after removal of CO₂ or H₂S, or both of them is used again in the absorber, CO₂ or H₂S, or both of them being removed by using the composite amine absorbent according to any one of the first to the ninth aspects.

### Advantageous Effects of Invention

According to the present invention, the addition of a disulfide compound as an oxidation inhibitor allows an oxidation reaction to occur faster than an amine absorbent so that materials related to a reaction are prepared as stable compounds and the amine absorbent is protected from oxidative degradation. As a result, the addition of the disulfide compound can inhibit degradation resulted from the oxidation of the amine absorbent, which is caused by oxygen in gas or the like.

### Brief Description of Drawings

FIG. 1 is a drawing illustrating the performance index of an oxidative degradation inhibitor of a disulfide compound.
FIG. 2 is a drawing illustrating the performance index of an oxidative degradation inhibitor of a piperidine compound.
FIG. 3 is a drawing illustrating the results of Test Examples and Comparative Examples with or without the addition of a disulfide compound.
FIG. 4 is a drawing illustrating the results of Test Examples and Comparative Examples with or without the addition of an oxidation inhibitor.
FIG. 5 is a drawing illustrating the results of Test Examples and Comparative Examples with or without the addition of a piperidine compound.
FIG. 6 is a schematic drawing illustrating the constitution of a CO₂ recovery unit according to Example 3. Description of Embodiments

Hereinbelow, preferred examples of the present invention are described in detail in view of the attached drawings. Meanwhile, it is evident that the present invention is not limited to the examples, and when there is more than one example, a combination of each example is also included in the present invention.

### Example 1

The composite amine absorbent according to Example 1 of the present invention is an absorbent for absorbing CO₂ or H₂S in gas, or both of them, which is obtained by dissolving in water 1) at least one amine compound and 2) a disulfide compound as an oxidative degradation inhibitor for the absorbent, in which the disulfide compound is a compound represented by the following Chemical Formula (I).

R1-S-S-R² ··· (I)

In the formula, R¹ or R² is any one of an alkyl group with 1 to 4 carbon atoms, a hydroxyethyl group, a carboxyethyl group, a cyclohexyl group, and a dibutylthiocarbamoyl group.

At least one amine compound of above 1) is an absorbent which is known to absorb CO₂ or H₂S, and it is at least one primary amine compound, at least one secondary amine compound, at least one tertiary amine compound, or a mixture thereof.

Herein, examples of the primary amine include any one of monoethanolamine (MEA), 2-amino-1-propanol (2A1P), 2-amino-1-butanol (2A1B), 2-amino-3-methyl-1-butanol (AMB), 1-amino-2-propanol (1A2P), 1-amino-2-butanol (1A2B), and 2-amino-2-methyl-1-propanol (AMP).

The secondary amine compound is preferably any one of secondary monoamine and secondary diamine, or a mixture thereof.

Examples of the secondary monoamine include a compound selected from at least one of 2-methylaminoethanol, 2-ethylaminoethanol, 2-n-propylaminoethanol, 2-n-butylaminoethanol, 2-n-pentylaminoethanol, 2-isopropylaminoethanol, 2-sec-butylaminoethanol, and 2-isobutylaminoethanol, but the present invention is not limited thereto.

Furthermore, examples of the secondary diamine include a compound selected from at least one of piperazine, 2-methylpiperazine, 2,3-dimethylpiperazine, 2,5-dimethylpiperazine, N,N'-dimethylethanediamine, N,N'-dimethylpropanediamine, N,N'-diethylethylenediamine, N,N'-diethylpropanediamine, N,N'-diisopropylethylenediamine, and N,N'-ditertiary butylethanediamine, but the present invention is not limited thereto.

The tertiary amine compound is a compound which is represented by the following Chemical Formula (II).

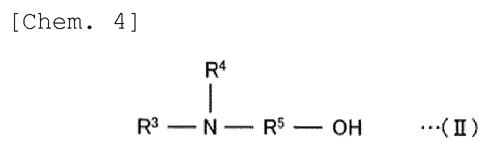

In the formula, R³ is an alkyl group with 1 to 4 carbon atoms, R⁴ is an alkyl group with 1 to 4 carbon atoms or a hydroxyethyl group, and R⁵ is an alkyl group with 2 to 4 carbon atoms.

Examples of the tertiary amine compound include N-methyldiethanolamine, N-ethyldiethanolamine, N-butyldiethanolamine, 2-dimethylaminoethanol, 2-diethylaminoethanol, 2-di-n-butylaminoethanol, N-ethyl-N-methylethanolamine, 3-dimethylamino-1-propanol, 2-dimethylamino-2-methyl-1-propanol, and 4-dimethylamino-1-butanol, but the present invention is not limited thereto.

Meanwhile, the tertiary amine compound functions as an oxidative degradation inhibitor as described below, and it can be also used as an absorbent. When it is used as an absorbent, in addition to use of only one kind of a tertiary amine compound, it is preferable to add, to a mixture of a primary amine and a secondary amine, a tertiary amine compound that requires lower regeneration energy than the primary and secondary amine compounds so as to contribute to the improvement of regeneration performance in a regenerator.

Examples of the disulfide compound as an oxidative degradation inhibitor include diethyl disulfide, dipropyl disulfide, dibutyl disulfide, di-tert-butyl disulfide, bis(2-hydroxyethyl) disulfide, 2-carboxyethyl disulfide, and dicyclohexyl disulfide, but the present invention is not limited thereto.

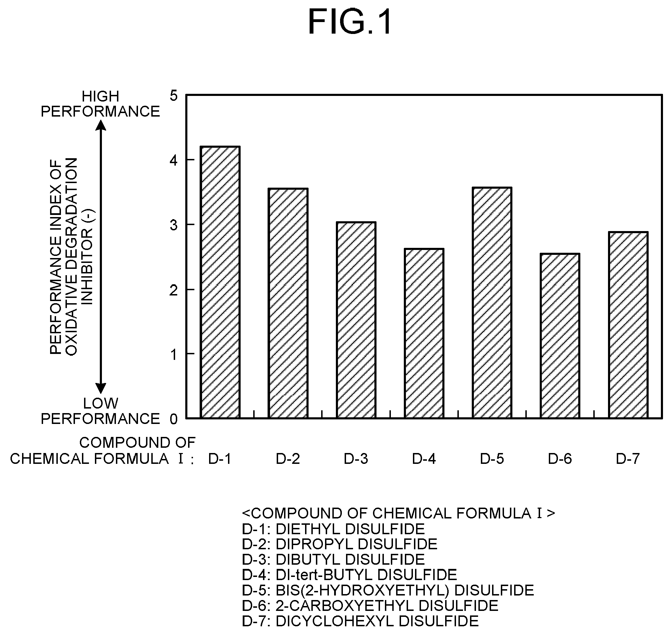

FIG. 1 is a drawing illustrating the performance index of an oxidative degradation inhibitor of a disulfide compound.

As described herein, the performance index of an oxidative degradation inhibitor means a difference between radical reaction rate possessed by an amine absorption agent and radical reaction rate possessed by an oxidative degradation inhibitor.

As illustrated in FIG. 1, diethyl disulfide (D-1), dipropyl disulfide (D-2), dibutyl disulfide (D-3), di-tert-butyl disulfide (D-4), bis(2-hydroxyethyl) disulfide (D-5), 2-carboxyethyl disulfide (D-6), and dicyclohexyl disulfide (D-7) are confirmed to have an effect of inhibiting oxidative degradation.

Namely, the disulfide compound allows the oxidation reaction to occur faster than an amine absorbent so that materials related to the reaction are prepared as stable compounds and the amine absorbent is protected from oxidative degradation. As a result, the addition of the disulfide compound can inhibit degradation resulted from the oxidation of the amine absorbent, which is caused by oxygen in gas or the like.

Furthermore, the ratio of adding a disulfide compound to the amine compound is preferably 1 to 20% by weight, and more preferably 2 to 10% by weight.

That is because, when it is more than 20% by weight as listed in "Table 1", a decrease in absorption capacity increases, and therefore not desirable.

On the other hand, when it is less than 1% by weight, influences of impurities cannot be ignored, and therefore not desirable.

**Table 1**

| (50°C, 10mol%dryCO₂ Conditions) | |
|---|---|
| Concentration of disulfide compound relative to amine compound (% by weight) | Absorption capacity ratio |
| 0 | 1 (Reference) |
| 10 | 0.99 |
| 20 | 0.96 |
| 30 | 0.93 |

Furthermore, when at least one primary amine compound, at least one secondary amine compound, or a mixture thereof is used as an absorbent, a tertiary amine compound may be contained as an oxidative degradation inhibitor in addition to the disulfide compound.

As described herein, the tertiary amine compound indicates a compound represented by the following Chemical Formula (II).

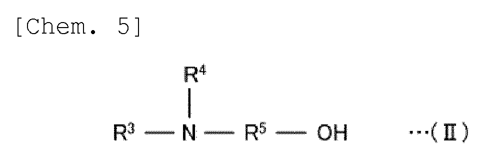

In the formula, R³ is an alkyl group with 1 to 4 carbon atoms, R⁴ is an alkyl group with 1 to 4 carbon atoms or a hydroxyethyl group, and R⁵ is an alkyl group with 2 to 4 carbon atoms.

Examples of the tertiary amine compound include N-methyldimethanolamine, N-ethyldiethanolamine, N-butyldiethanolamine, 2-dimethylaminoethanol, 2-diethylaminoethanol, 2-di-n-butylaminoethanol, N-ethyl-N-methylethanolamine, 3-dimethylamino-1-propanol, and 2-dimethylamino-2-methyl-1-propanol, and 4-dimethylamino-1-butanol, but the present invention is not limited thereto.

When a disulfide compound and a tertiary amine compound are used as an oxidative degradation inhibitor, they are added preferably at 1 to 20% by weight, and more preferably at 2 to 10% by weight relative to the primary amine compound, the secondary amine compound, or a mixture thereof.

The blending ratio between the disulfide compound and the tertiary amine compound is preferably 70:30 to 30:70.

Furthermore, when at least one primary amine compound, at least one secondary amine compound, or a mixture thereof is used as an absorbent, at least one piperidine compound may be contained as an oxidative degradation inhibitor in addition to the disulfide compound. As described herein, the piperidine compound is a compound represented by the following Chemical Formula (III) (with the proviso that, piperidine is excluded).

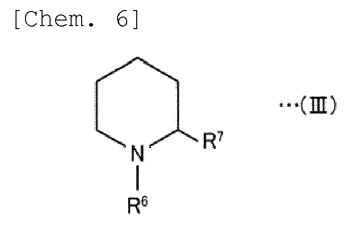

In the formula, R⁶ is H, an alkyl group with 1 to 4 carbon atoms, a 2-aminoethyl group, or a 3-aminopropyl group, and R⁷ is any one of H and an alkyl group with 1 to 4 carbon atoms.

Examples of the piperidine compound represented by Chemical Formula (III) include 1-methylpiperidine, 1-ethylpiperidine, 1-propylpiperidine, 1-butylpiperidine, 2-methylpiperidine, 2-ethylpiperidine, 2-propylpiperidine, 2-butylpiperidine, 1-(2-aminoethyl)-2-methylpiperidine, and 1-(3-aminopropyl)-2-methylpiperidine, but the present invention is not limited thereto.

When a disulfide compound and a piperidine compound are used as an oxidative degradation inhibitor, they are added preferably at 1 to 20% by weight, and more preferably at 2 to 10% by weight relative to the primary amine compound, the secondary amine compound, or a mixture thereof.

The blending ratio between the disulfide compound and the piperidine compound is preferably 70:30 to 30:70.

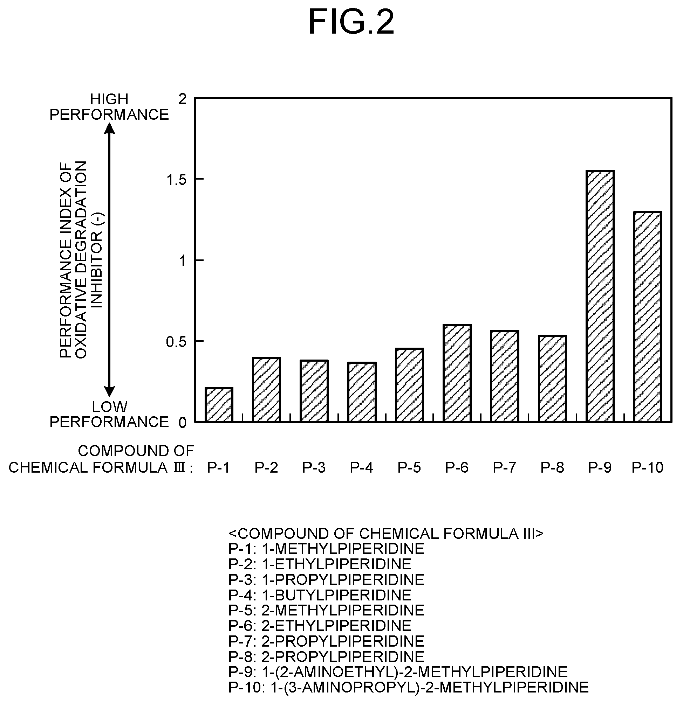

FIG. 2 is a drawing illustrating the performance index of an oxidative degradation inhibitor of a piperidine compound.

As illustrated in FIG. 2, 1-methylpiperidine (P-1), 1-ethylpiperidine (P-2), 1-propylpiperidine (P-3), 1-butylpiperidine (P-4), 2-methylpiperidine (P-5), 2-ethylpiperidine (P-6), 2-propylpiperidine (P-7), 2-butylpiperidine (P-8), 1-(2-aminoethyl)-2-methylpiperidine (P-9), and 1-(3-aminopropyl)-2-methylpiperidine (P-10) are confirmed to have an effect of inhibiting oxidative degradation. As such, the addition of a piperidine compound can inhibit degradation resulted from the oxidation of an amine absorbent, which is caused by oxygen in gas or the like.

### [Test Example]

Hereinbelow, explanations are given for Test Examples which exhibit the effect of examples of the present invention.

### [Test Examples 1 and 2]

In each example, as an amine absorbent, secondary monoamine was used and a piperazine compound was used as secondary diamine to give a secondary amine composite absorbing agent.

Next, dibutyl disulfide (D-3) and bis(2-hydroxyethyl) disulfide (D-5) in FIG. 1 were contained in the secondary composite amine compound and the oxidative degradation rate ratio of the amine absorbent was obtained. They were employed as Test Example 1 and Test Example 2 (Test-1, Test-2).

For comparison, a case in which the disulfide compound represented by Chemical Formula (I) has not been added was employed as Comparative Example 1 (Comp-1) and a case in which the tertiary amine compound (methyl diethanolamine (MDEA)) has been added was employed as Comparative Example 2 (Comp-2).

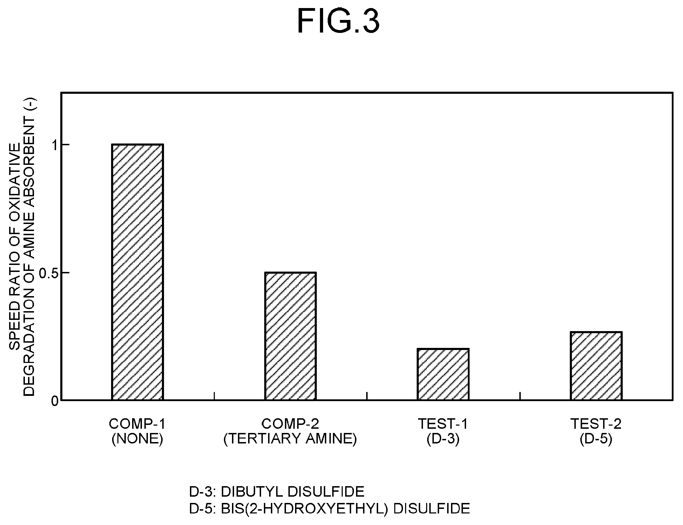

FIG. 3 is a drawing illustrating the results of Test Examples and Comparative Examples with or without the addition of a disulfide compound.

As described herein, the oxidative degradation rate ratio indicates the ratio of oxidative degradation rate of an amine absorbing agent added with an oxidative degradation inhibitor with respect to the oxidative degradation rate of an amine absorbing agent not added with an oxidative degradation inhibitor.

As illustrated in FIG. 3, it was confirmed that, the addition of a disulfide compound can inhibit degradation resulted from the oxidation of an amine absorbent, which is caused by oxygen in gas or the like even in a secondary composite amine absorbing agent.

It is believed that, as the disulfide compound can rapidly convert a material related to an oxidation chain reaction of an amine absorbing agent to a stable compound, it exhibits an activity of inhibiting the oxidation of an absorbing agent.

As a result, loss of an absorbent resulted from the degradation of an amine compound in the absorbent can be further reduced compared to an amine absorbent of a related art.

### [Test Examples 3, 4 and 5]

In this example, as an amine absorbent, secondary monoamine was used and a piperazine compound was used as secondary diamine to give a secondary amine composite absorbing agent.

Next, a mix oxidative degradation inhibitor (M-1) in which N-methyl diethanolamine as a tertiary amine compound and dibutyl disulfide as a disulfide compound had been mixed with each other was contained in addition to the secondary composite amine compound and the oxidative degradation rate ratio of the amine absorbent was obtained. It was employed as Test Example 3 (Test-3).

A mix oxidative degradation inhibitor (M-2) in which N-ethyl diethanolamine as a tertiary amine compound and bis(2-hydroxyethyl) disulfide as a disulfide compound are mixed with each other was contained in addition to the secondary composite amine compound and the oxidative degradation rate ratio of the amine absorbent was obtained. It was employed as Test Example 4 (Test-4).

A mix oxidative degradation inhibitor (M-3) in which 1-(3-aminopropyl)-2-methylpiperidine as piperidine and dibutyl disulfide as a disulfide compound are mixed with each other was contained in addition to the secondary composite amine compound and the oxidative degradation rate ratio of the amine absorbent was obtained. It was employed as Test Example 5 (Test-5).

For comparison, a case in which a disulfide compound represented by Chemical Formula (I) had not been added was employed as Comparative Example 1 (Comp-1).

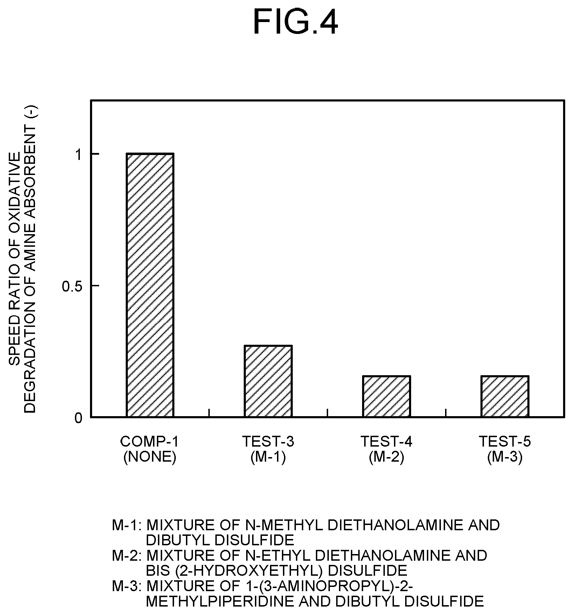

FIG. 4 is a drawing illustrating the results of Test Examples and Comparative Examples with or without the addition of an oxidation inhibitor.

As illustrated in FIG. 4, it was confirmed that, the addition of a disulfide compound and a tertiary amine compound as an oxidation inhibitor (Test-3, 4) can inhibit the degradation resulted from oxidation of an amine absorbent, which is caused by oxygen in gas or the like even in a secondary composite amine absorbing agent.

Furthermore, as illustrated in FIG. 4, it was confirmed that, the addition of a disulfide compound and a piperidine compound as an oxidation inhibitor (Test-5) can inhibit degradation resulted from the oxidation of an amine absorbent, which is caused by oxygen in gas or the like even in a secondary composite amine absorbing agent.

As illustrated in Test Examples 3, 4, and 5, in particular, in the oxidation chain reaction of an amine absorbing agent, the disulfide compound, tertiary amine compound, and piperidine compound exhibit different activities for stabilization of materials related to the chain reaction, and thus their synergistic effects are exhibited.

As a result, loss of an absorbent resulted from the degradation of an amine compound in the absorbent can be further reduced compared to an amine absorbent of a related art.

### Example 2

The composite amine absorbent according to Example 2 of the present invention is an absorbent for absorbing CO₂ or H₂S in gas, or both of them, which is obtained by dissolving in water 1) at least one primary amine compound, at least one secondary amine compound, or a mixture thereof, and 2) an oxidative degradation inhibitor for the absorbent, in which the oxidative degradation inhibitor is a piperidine compound which has a structure of the following Chemical Formula (III) with exclusion of piperidine.

[Chem. 7]

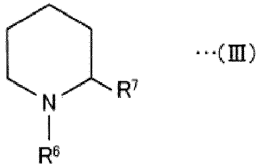

In the formula, R⁶ is H, an alkyl group with 1 to 4 carbon atoms, a 2-aminoethyl group, or a 3-aminopropyl group, and R⁷ is any one of H and an alkyl group with 1 to 4 carbon atoms.

Since specific examples of the piperidine compound are described above, no further explanations will be given herein.

The piperidine compound is preferably added at 1 to 20% by weight, and more preferably at 2 to 10% by weight relative to a primary amine compound, a secondary amine compound, or a mixture thereof.

### [Test Example]

Hereinbelow, explanations are given for test examples which describe the effects of the examples of the invention.

### [Test Example 6]

In this example, as an amine absorbent, secondary monoamine was used and a piperazine compound was used as secondary diamine to give a secondary amine composite absorbing agent.

Next, 1-(3-aminopropyl)-2-methylpiperidine (P-10) in FIG. 2 was contained in addition to the secondary composite amine compound and the oxidative degradation rate ratio of the amine absorbent was obtained. It was employed as Test Example 6).

For comparison, a case in which 1-(3-aminopropyl)-2-methylpiperidine (P-10) represented by Chemical Formula (I) had not been added was employed as Comparative Example 1 (Comp-1).

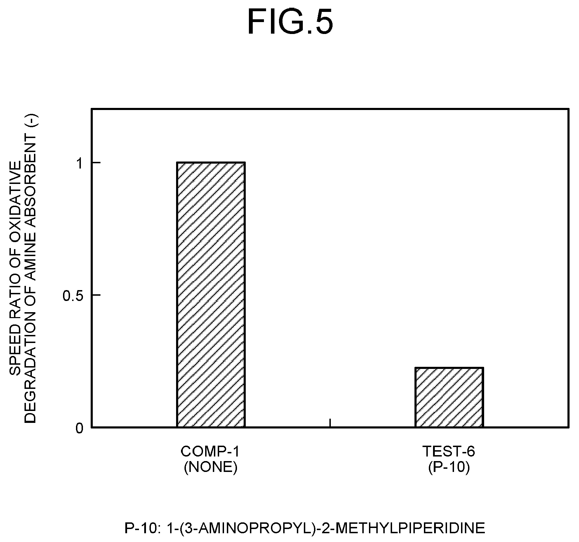

FIG. 5 is a drawing illustrating the results of Test Examples and Comparative Examples with or without the addition of a piperidine compound.

As illustrated in FIG. 5, it was confirmed that, the addition of a piperidine compound can inhibit degradation resulted from oxidation of an amine absorbent, which is caused by oxygen in gas or the like even in a secondary composite amine absorbing agent.

As a result, loss of an absorbent resulted from the degradation of an amine compound in the absorbent can be further reduced compared to an amine absorbent of a related art.

### Example 3

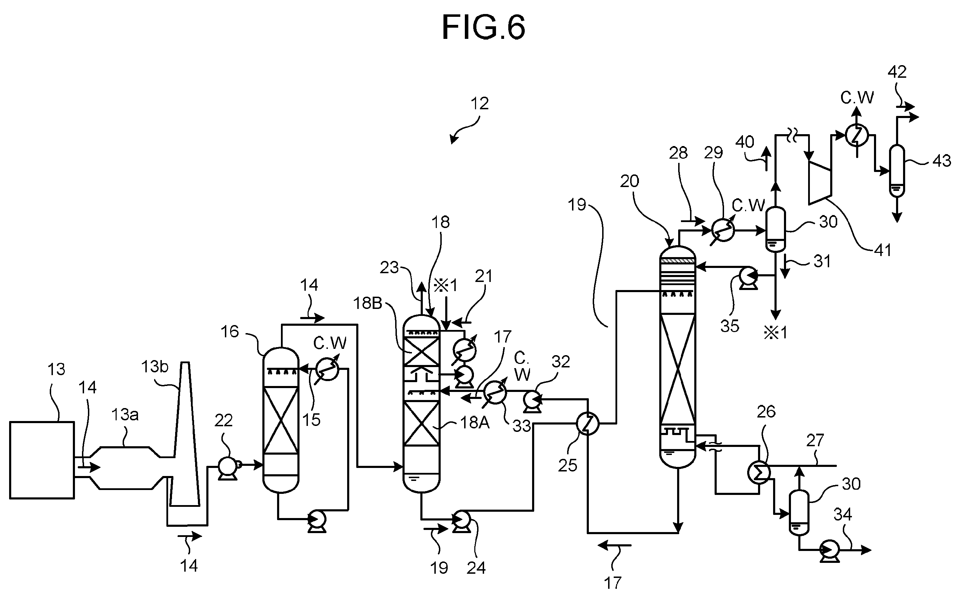

The process to be adopted for the method of the present invention for removing CO₂ or H₂S, or both of them in gas will be described by referring to FIG. 6 as to an exemplary removal apparatus for removing CO₂, but it is not particularly limited thereto.

Examples of the gas treated according to the present invention include coal gasification gas, synthetic gas, cokes furnace gas, petroleum oil gas, natural gas, and flue gas, but not limited thereto. It may be any gas if it is gas containing acidic gas like CO₂ or H₂S.

FIG. 6 is a schematic drawing illustrating the constitution of a CO₂ recovery unit according to Example 3. As illustrated in FIG. 6, a CO₂ recovery unit 12 according to Example 1 has a flue gas cooling unit 16 in which flue gas 14 containing CO₂ or O₂, which has been discharged from an industrial combustion facility 13 like a boiler or a gas turbine, is cooled by cooling water 15, a CO₂ absorber 18 with a CO₂ recovery section 18A in which the flue gas 14 containing cooled CO₂ is brought into contact with a CO₂ absorbent 17 for absorbing CO₂ (hereinbelow, also referred to as an "absorbent") for removal of CO₂ from the flue gas 14, and an absorbent regenerator 20 in which CO₂ is desorbed from a CO₂ absorbent 19 after absorbing CO₂ (hereinbelow, also referred to as a "rich solution") for regeneration of the CO₂ absorbent. Furthermore, in the CO₂ recovery unit 12, the regenerated CO₂ absorbent 17 (hereinbelow, referred to as a "lean solution") obtained after removal of CO₂ in the absorbent regenerator 20 is used again in the CO₂ absorber 18 as a CO₂ absorbent.

Meanwhile, in FIG. 6, the sign 13a indicates a flue gas duct, 13b indicates a stack, and 34 indicates steam condensate. The aforementioned CO₂ recovery unit may be installed later for recovering CO₂ from a previously-installed flue gas source, or it may be simultaneously installed for a newly-installed flue gas source. A damper is installed on the stack 13b, and it is closed during operation of the CO₂ recovery unit 12. In addition, it is set at open state when the flue gas source is in operation but the CO₂ recovery unit 12 is halted.

Regarding a method for recovering CO₂ by using the CO₂ recovery unit 12, the flue gas 14 containing CO₂ from the industrial combustion facility 13 like a boiler or a gas turbine is firstly subjected to pressure boosting by an flue gas blower 22, sent to the flue gas cooling unit 16 in which it is cooled by the cooling water 15, and then sent to the CO₂ absorber 18.

In the CO₂ absorber 18, the flue gas 14 is contacted in counterflow with the CO₂ absorbent 17 as an amine absorbent of this example, and CO₂ in the flue gas 14 is absorbed by the CO₂ absorbent 17 according to a chemical reaction.

The CO₂ removed flue gas after removal of CO₂ in the CO₂ recovery section 18A is subjected to vapor-liquid contact with circulating washing water 21 which contains a CO₂ absorbent fed from a nozzle of a washing section 18B of the CO₂ absorber 18. Accordingly, the CO₂ absorbent 17 accompanied with CO₂ removed flue gas is recovered, and after that, flue gas 23 from which CO₂ has been removed is discharged to the outside of the system.

Furthermore, the rich solution of the CO₂ absorbent 19 in which CO₂ is absorbed, is subjected to pressure boosting by a rich solution pump 24, heated in a rich and lean solution heat exchanger 25 with a lean solution which is the CO₂ absorbent 17 regenerated in the absorbent regenerator 20, and then fed to the absorbent regenerator 20.

The rich solution 19, which has been discharged to the inside from the top of the absorbent regenerator 20, causes an endothermic reaction due to water vapor supplied from the bottom part, thus desorbing most of CO₂. The CO₂ absorbent after desorption of part or most of CO₂ in the absorbent regenerator 20 is referred to as a semi lean solution. By the time that it reaches the bottom part of the absorbent regenerator 20, the semi lean solution becomes CO₂ absorbent (lean solution) 17 in which almost all CO₂ has been removed. As part of the lean solution 17 is over-heated by water vapor 27 in a regeneration over-heater 26, water vapor is supplied to the inside of the absorbent regenerator 20.

Meanwhile, from the top part of the absorbent regenerator 20, CO₂ accompanying gas 28 with water vapor desorbed from the rich solution 19 and the semi lean solution in the regenerator is discharged, water vapor is condensed by a condenser 29, water is separated by a separation drum 30, and CO₂ gas 40 is discharged to the outside of the system, compressed by a separate compressor 41, and then recovered. The compressed and recovered CO₂ gas 42 passes through a separation drum 43, and can be injected under pressure to an oil field by using enhanced oil recovery (EOR) process or it can be stored in aquifer as a measure for dealing with global warming.

Reflux water 31 separated from CO₂ accompanying gas 28 with water vapor followed by reflux in the separation drum 30 is supplied by a reflux water circulation pump 35 to each of the top part of absorbent regenerator 20 and a circulating washing water 21 side.

The regenerated CO₂ absorbent (lean solution) 17 is cooled by the rich solution 19 in the rich and lean solution heat exchanger 25, subsequently subjected to pressure boosting by a lean solution pump 32, cooled by a lean solution 33, and fed to the inside of the CO₂ absorber 18. Meanwhile, only brief information is described in this embodiment, and explanations are given while omitting part of the attached device.

By applying the composite amine absorbent of this example as an amine absorbent to the apparatus described above, degradation resulted from the oxidation of an amine absorbent, which is caused by oxygen in gas or the like, can be inhibited, and loss of an absorbent resulted from the degradation of the absorbent can be reduced.

### Reference Signs List

- 12: CO₂ RECOVERY UNIT

- 13: INDUSTRIAL COMBUSTION FACILITY
- 14: FLUE GAS
- 16: FLUE GAS COOLING UNIT
- 17: CO₂ ABSORBENT (LEAN SOLUTION)
- 18: CO₂ ABSORBER
- 19: CO₂ ABSORBENT AFTER ABSORBING CO₂ (RICH SOLUTION)
- 20: ABSORBENT REGENERATOR
- 21: WASHING WATER

## Claims

1. A composite amine absorbent dissolved in water for absorbing CO₂ or H₂S in gas, or both of them, which comprises:
1) at least one amine compound, and
2) a disulfide compound as an oxidative degradation inhibitor for the absorbent,
wherein the disulfide compound is a compound represented by the following Chemical Formula (I):
R¹-S-S-R² ··· (I)
in the formula, R¹ or R² is any one of an alkyl group with 1 to 4 carbon atoms, a hydroxyethyl group, a carboxyethyl group, a cyclohexyl group, and a dibutylthiocarbamoyl group.

2. The composite amine absorbent according to claim 1, wherein the disulfide compound is added at 1 to 20% by weight to the amine compound.

3. The composite amine absorbent according to claim 1, wherein the amine compound is at least one primary amine compound, at least one secondary amine compound, at least one tertiary amine compound, or a mixture thereof.

4. The composite amine absorbent according to claim 3, wherein, when the amine compound is at least one primary amine compound, at least one secondary amine compound, or a mixture thereof, a tertiary amine compound is contained in addition to the disulfide compound as the oxidative degradation inhibitor, and the tertiary amine compound is a compound represented by the following Chemical Formula (II) : 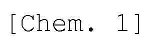 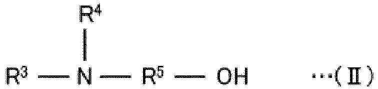 in the formula, R³ is an alkyl group with 1 to 4 carbon atoms, R⁴ is an alkyl group with 1 to 4 carbon atoms or a hydroxyethyl group, and R⁵ is an alkyl group with 2 to 4 carbon atoms.

5. The composite amine absorbent according to claim 4, wherein the disulfide compound and the tertiary amine compound is added at 1 to 20% by weight to the primary amine compound, the secondary amine compound, or the mixture thereof.

6. The composite amine absorbent according to claim 3, wherein, when the amine compound is at least one primary amine compound, at least one secondary amine compound, or a mixture thereof, at least one piperidine compound is contained in addition to the disulfide compound as the oxidative degradation inhibitor, and the piperidine compound is a compound represented by the following Chemical Formula (III) (with the proviso that piperidine is excluded): 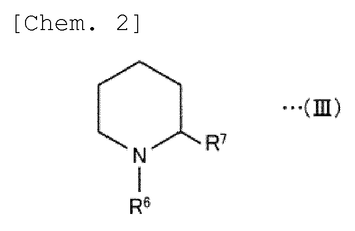 in the formula, R⁶ is H, an alkyl group with 1 to 4 carbon atoms, a 2-aminoethyl group, or a 3-aminopropyl group, and R⁷ is any one of H and an alkyl group with 1 to 4 carbon atoms.

7. The composite amine absorbent according to claim 6, wherein the disulfide compound and the piperidine compound are added at 1 to 20% by weight to a primary amine compound, a secondary amine compound, or a mixture thereof.

8. A composite amine absorbent dissolved in water for absorbing CO₂ or H₂S in gas, or both of them, which comprises:
1) at least one primary amine compound, at least one secondary amine compound, or a mixture thereof, and
2) an oxidative degradation inhibitor for the absorbent,
wherein the oxidative degradation inhibitor is a piperidine compound having the following Chemical Formula (III) with exclusion of piperidine: 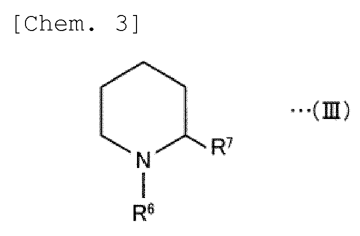 in the formula, R⁶ is H, an alkyl group with 1 to 4 carbon atoms, a 2-aminoethyl group, or a 3-aminopropyl group, and R⁷ is any one of H and an alkyl group with 1 to 4 carbon atoms.

9. The composite amine absorbent according to claim 8, wherein the piperidine compound is added at 1 to 20% by weight to the primary amine compound, the secondary amine compound, or the mixture thereof.

10. An apparatus (12) for removing CO₂ or H₂S, or both of them comprising: an absorber (18) for removing CO₂ or H₂S, or both of them by bringing gas containing CO₂ or H₂S, or both of them into contact with an absorbent; and a regenerator (20) for regenerating a solution in which CO₂ or H₂S, or both of them has been absorbed, wherein the solution regenerated in the regenerator after removal of CO₂ or H₂S, or both of them is used again in the absorber; the apparatus being configured to use the composite amine absorbent according to any one of claims 1 to 9.

11. A method for removing CO₂ or H₂S, or both of them by using an absorber for removing CO₂ or H₂S, or both of them by bringing gas containing CO₂ or H₂S, or both of them into contact with an absorbent; and a regenerator for regenerating a solution in which CO₂ or H₂S, or both of them has been absorbed, wherein the solution regenerated in the regenerator after removal of CO₂ or H₂S, or both of them is used again in the absorber; CO₂ or H₂S, or both of them being removed by using the composite amine absorbent according to any one of claims 1 to 9.
